# EUROPÄISCHE PATENTSCHRIFT

(11) **EP 0 369 211 B1**
(45) Veröffentlichungstag und Bekanntmachung des Hinweises auf die Patenterteilung: **29.09.1993**
(21) Anmeldenummer: 89119682.6
(22) Anmeldetag: 24.10.1989
(51) Int. Cl.: B23B 31/02, B23B 31/22, B23B 29/04

(54) **Spannvorrichtung zur Verbindung von Werkzeugkopf und Werkzeughalter an Werkzeugmaschinen**
Clamping device to link a tool head with a tool holder in machine tools
Dispositif de serrage pour assembler une tête d'outillage et un porte-outil dans des machines-outils

(30) Priorität: 31.10.1988 DE 3837007
(43) Veröffentlichungstag der Anmeldung: 23.05.1990
(73) Patentinhaber: Krupp Widia GmbH, 45145 Essen (DE)
(72) Erfinder: Von Haas, Rainer, Dipl.-Ing., D-2054 Geesthacht (DE); Ruther, Günter, Dipl.-Ing., D-4370 Marl (DE)
(74) Vertreter: Vomberg, Friedhelm, Dipl.-Phys.

(56) Entgegenhaltungen:
- EP-A- 0 178 417
- FR-A- 1 068 473
- US-A- 1 781 442

## Beschreibung

Die Erfindung betrifft eine Spannvorrichtung zur Verbindung von Werkzeugkopf und Werkzeughalter an Werkzeugmaschinen mit einem wechselbaren Werkzeugkopf, der mit einem zylindrischen oder zumindest teilweise kegelig ausgebildeten Aufnahmezapfen versehen ist, der mit einer entsprechenden Aufnahmebohrung des Werkzeughalters zusammenwirkt, wobei der Werkzeughalter und der Werkzeugkopf mittels betätigbarer Spannelemente, die beim Spannen von innen nach außen in Ausnehmungen des Werkzeugträgers bewegt werden, so verriegelbar sind, daß eine kraft- und formschlüssige Verbindung zwischen Werkzeugkopf und Werkzeughalter erreicht ist.

Aus der DE-A 30 07 440 ist eine Werkzeugspannvorrichtung bekannt, bei der der Werkzeughalter einen über einen bestimmten Hub beweglichen Spannbolzen aufweist, der an ihm liegende, radial nach außen wirkende Spannstifte beaufschlagt, die zur Arretierung des Werkzeugträgers in Ausnehmungen des Werkzeugträgers eingreifen. Weiterhin sind aus der US-A-4 747 735 Werkzeugspannvorrichtungen mit einem Spannbolzen bekannt, durch dessen axiale Verschiebung im Werkzeughalter Spannkugeln radial nach außen bewegbar sind, die in Ausnehmungen des Werkzeugträgers arretierend eingreifen.

Aus der FR-A 1 068 473 ist eine Kupplung für eine Werkzeugspindel bekannt, bei der über einen drehbar angeordneten und axial verschiebbaren Stellring Verriegelungskugeln in entsprechende nutförmige Ausnehmungen des konischen Zapfens des Werkzeugträgers bzw. Werkzeuges bewegt werden können und womit die Verriegelung bewirkt wird.

Ferner ist aus der DE-A 36 02 247 eine Spannvorrichtung der eingangs genannten Art bekannt, bei der im Werkzeughalter ein in dessen Längsrichtung beweglicher Spannschieber vorgesehen ist, an dessen Stirnfläche mit der Planfläche einer Sackbohrung im Werkzeugkopf zusammenwirkt und in dessen vorderem Teil radial bewegliche Spannbacken vorgesehen sind, die mit einem mit dem Werkzeughalter fest verbundenen Zapfen in der Weise zusammenwirken, daß beim Aufschieben der Spannbacken auf den Zapfen diese eine Nut in der Aufnahmebohrung des Werkzeugkopfes hintergreifen und diesen in der Einstellung so verriegeln, daß sein Anlagebund an der Gegenfläche des Wekrzeughalters fest anliegt.

Gleichgültig, welche Spannelemente nach dem Stand der Technik verwendet werden, werden diese stets durch eine lineare Bewegung in schrägen Spannbahnen bewegt. Die genannten Konstruktionen lassen bei kurzen Spannwegen hohe Spannkräfte zu, nachteiligerweise sind jedoch aufwendige Sicherungen notwendig, um die hohen Spannkräfte beizubehalten.

Es ist daher Aufgabe der vorliegenden Erfindung, die eingangs beschriebene Spannvorrichtung dahingehend zu verbessern, daß bei einfachem Aufbau möglichst kurze Spannwege und damit reduzierte Spannzeiten gegeben sind, wobei die Spannvorrichtung eine möglichst große Steifigkeit aufweisen soll. Hierbei sollen die größten Spannkräfte bei kleiner Spannelementverschiebung erst dann aufgewendet werden, wenn der Werkzeugkopf die Spannstellung im Werkzeughalter erreicht hat bzw. diese beim Lösen noch nicht aufgehoben ist.

Diese Aufgabe wird durch die im Anspruch 1 angegebenen Merkmale gelöst. Vorteilhafterweise ist diese Spannvorrichtung für alle nach dem Stand der Technik bekannten, zuvor beschriebenen Spannarten verwendbar. Es wird einheitlich nur ein kurzer Spannweg benötigt, was die Spannzeit erheblich verkürzt. Hiermit kann an Werkzeugmaschinen ein möglichst schneller Werkzeugwechsel vorgenommen werden, was Rationalisierungsbemühungen in großem Maße Rechnung trägt.

Da nach der Bearbeitung Werkzeugköpfe häufig im Werkzeughalter festsitzen oder durch die Konstruktion einer konischen Ausführung des Aufnahmezapfens des Werkzeugkopfes selbstklemmend im Werkzeughalter festliegen, ist es erforderlich, zum Lösen des Werkzeugkopfes ein sogenanntes Abdrückelement zu verwenden. Solche Abdrückelemente werden nach dem Stand der Technik meist durch hydraulische Zylinder betätigt, die das Abdrückelement gegen eine entsprechende Gegenfläche des Werkzeugkopfes pressen. Nach einer Weiterbildung der Erfindung ist die Spannwelle so ausgebildet, daß sie durch eine zweite spiralige Führung das Abdrückelement betätigen kann, was die Kupplungsbauweise in erheblichem Maße vereinfacht.

Die Spannwelle kann in radialen als auch in axialen Bohrungen des Werkzeughalters geführt werden, wodurch sich eine kurze Bauweise des Werkzeughalters realisieren läßt. Als Verdrehsicherung können beispielsweise O-Ringe zwischen der Spannwelle und der entsprechenden Bohrung des Werkzeughalters dienen, wobei die O-Ringe vorzugsweise aus einem Elastomer bestehen.

Um die Spannzeit zu verkürzen, sind die Führungen bzw. ist die Spannbahn auf einen Spann- bzw. Drehwinkel von 20° bis 160°, vorzugsweise 90° begrenzt. Unter dem Spann- bzw. Drehwinkel soll der Winkel verstanden werden, um den die Spannwelle zum Spannen bzw. Lösen des Werkzeugkopfes gedreht werden muß. Entsprechend lang auf dem Mantel der Spannwelle sind die Führungen bzw. ist die Spannbahn zu gestalten.

Nach einer Weiterbildung der Erfindung beschreibt die Führungsspirale eine stetige Raumkurve zweiter oder höherer Ordnung, deren Steigung - auf den Werkzeugspannvorgang bzw. das Abdrücken bezogen - exponentiell oder logarithmisch kontinuierlich abnimmt.

In einer alternativen Ausführungsform ist die Führungsspirale als hyperbolische oder logarithmische Schraubenlinie im Raum ausgebildet. Den vorbeschriebenen Ausführungsformen liegt der Gedanke zugrunde, daß durch eine kurze Spannbewegung am Anfang durch eine starke Steigung der Spannweg der Spannelemente relativ groß ist und in einem folgenden wesentlich flacheren Teil die erforderlich hohen Spannkräfte stark steigen lassen. Entsprechendes gilt auch für das Abdrücken, wo zunächst hohe Kräfte erforderlich sind, bevor nach Überwindung des Haftreibungsschlusses es wesentlich auf den höheren Spannweg ankommt.

Als Spannelemente dienen vorzugsweise Kugeln, Backen oder Stifte. Diese Spannelemente werden durch die Bewegung der Spannwelle in Bohrungen in einer bzw. Ringnut in den Aufnahmezapfen des Werkzeugkopfes geschoben.

Die Spannvorrichtung wird von außen betätigt.

Ausführungsbeispiele der Erfindung sind in den Zeichnungen dargestellt. Es zeigen:
- Fig. 1: einen Schnitt durch die erfindungsgemäße Spannvorrichtung mit Darstellung der Lage der radial angeordneten Spannwelle im Werkzeugsystem,
- Fig. 2: eine Teilquerschnittsansicht entlang der Linie II-II nach Fig. 1,
- Fig. 3: eine Teilquerschnittsansicht entlang der Linie III-III nach Fig. 1,
- Fig. 4: einen Schnitt durch eine Spannvorrichtung als axialen Einbau,
- Fig. 5: einen Schnitt entlang der Linie V-V in Fig. 4,
- Fig. 6: einen Schnitt durch eine axiale Spannvorrichtung mit einer eine Raumkurve beschreibenden Spannbahn und Kugeln als Spannelementen und
- Fig. 7: einen Schnitt durch eine entsprechende Spannvorrichtung gemäß Fig. 6 mit Spannbacken.

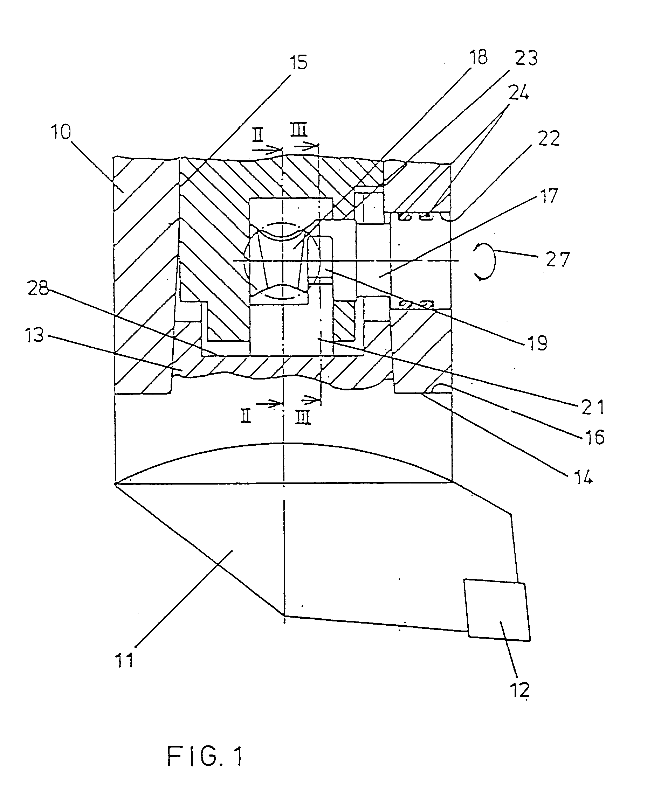

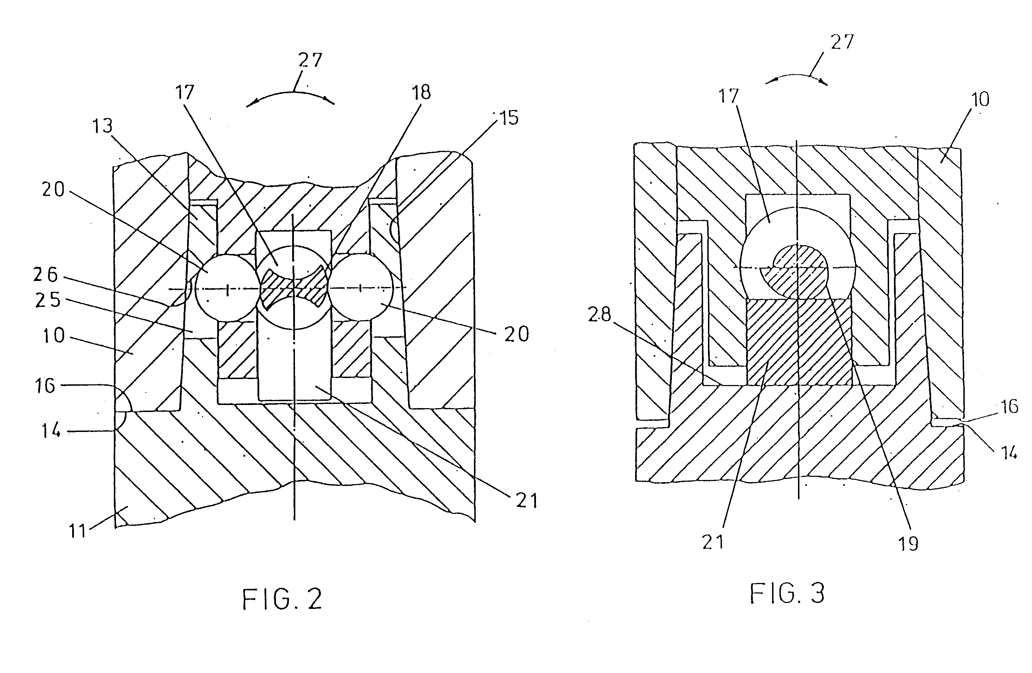

Der in Fig. 1 und 2 dargestellte Werkzeugkopf 11, der von Hand oder mittels einer nicht dargestellten Greifereinrichtung automatisch aus einem Werkzeugmagazin dem Werkzeughalter 10 zugeführt werden kann, besitzt einen zylindrischen oder konischen Aufnahmezapfen 13, der in eine entsprechend geformte Aufnahmebohrung 15 des Werkzeughalters 10 eingeführt werden kann. Hierbei kommen in dem gespannten Zustand - siehe Fig. 1 und 2 der ringförmige Anlagebund 14 des Werkzeugkopfes 11 und die ringförmige Gegenfläche 16 des Werkzeughalters 10 zur Anlage. Im vorliegenden Falle trägt der Werkzeugkopf 11 eine Wendeschneidplatte 12.

Als Spannvorrichtung dient eine in Richtungen des Doppelpfeils 27 hin und her bewegbare drehbare Spannwelle 17, deren Mantel eine spiralartige Spannbahn 18 und eine spiralartige Führung 19 für das Abdrückelement 21 aufweist. Die entsprechenden Führungen sind beispielsweise in den Fig. 2 und 3 dargestellt, wobei es sich im Prinzip um Spiralen oder Kurven mathematischer zweiter oder höherer Ordnung handelt. Jedenfalls verwirklichen diese Führungsbahnen das erfindungsgemäße Prinzip, daß durch eine starke Steigung der Spannbahnen am Anfang der Spannweg der Spannelemente bei kurzer Spannbewegung relativ groß ist, während in einem nachfolgenden, wesentlich flacheren Teil der Spannbahn die erforderlichen hohen Spannkräfte aufgebracht werden. In entsprechender Umkehrung gilt gleiches für die mit dem Abdrückelement 21 in Wechselwirkung stehende Führungsspirale 19. Wie aus Fig. 2 ersichtlich, wirkt die Spannwelle 17 auf Spannkugeln 20, die beim Spannen des Werkzeugkopfes 11 in eine entsprechend ausgebildete Bohrung 25 im Aufnahmezapfen 13 gedrückt werden. Diese Bohrung 25 besitzt wenigstens eine abgeschrägte Seitenfläche 26, um die Spannbewegung möglichst reibungsarm durchführen zu können. Die Spannwelle 17 selbst ist - wie aus Fig. 1 ersichtlich - in radialen Bohrungen 22 des Werkzeughalters 10 einerseits und einer weiteren radialen Bohrung 23 gelagert. Als Verdrehsicherung dienen aus einem Elastomer bestehende O-Ringe 24.

Im vorliegenden Fall wird das Spannen bzw. Abdrücken durch Verdrehung der Spannwelle um etwa 90° bewirkt.

Die erfindungsgemäße Spannvorrichtung arbeitet folgendermaßen: Verdreht man die Spannwelle 17, so bewegen sich die Spannelemente 20 aus ihrer Ruhelage auf der Spannbahn 18 und greifen schließlich an der Schrägfläche 26 der Bohrung 25 des Werkzeugkopfes 11 an und ziehen ihn in die Aufnahme des Werkzeughalters. In dem Augenblick, in dem der Werkzeugkopf 11 eine Bewegung in Richtung des Werkzeughalters beginnt, schiebt die mit Bezugszeichen 28 bezeichnete Fläche des Werkzeugkopfes 11 das Abdrückelement 21 zurück, da durch die rücklaufende Spirale 19 (siehe Fig. 3) Platz geschaffen wird. Bei der weiteren Drehbewegung wird der Werkzeugkopf 11 fest in die Aufnahme des Werkzeughalters gedrückt und durch die nun steigende Kraft festgehalten.

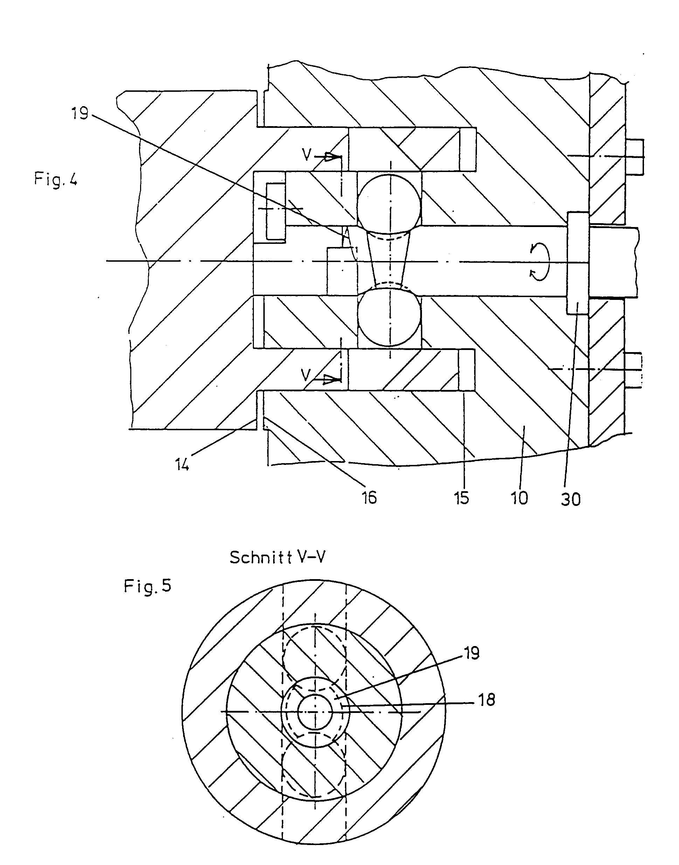

Der Lösevorgang wird durch die Verdrehung in entgegengesetzter Richtung eingeleitet. Das Abdrückelement 21 wird in Richtung des Werkzeugkopfes 11 bewegt, drückt dort gegen die innere Fläche 28 des Werkzeugkopfes und schiebt den Werkzeugkopf mit steigender Kraft aus dem Grundhalter. Diese Bewegung entspricht einer Linksdrehung der Spannwelle 11 nach der Darstellung in Fig. 3.
Außer den in den bisherigen Beispielen beschriebenen radialen Spannvorrichtungen sind jedoch auch axiale Spannvorrichtungen möglich, wie sie beispielsweise in Fig. 4 bis 7 dargestellt sind.

Fig. 4 zeigt einen ringförmigen Anlagebund 14 des Werkzeugkopfes sowie eine ringförmige Gegenfläche 16 (Plananlage) des Werkzeughalters 10. Um eine axiale Verschiebung der drehbaren Spannwelle 17 zu verhindern, ist ein Bund 30 angebracht. Die abstoßende Spirale 19 ist stirnseitig an der drehbaren Spannwelle 17. Die Kugeln werden in Bohrungen des Werkzeughalters geführt, die nur eine radiale Bewegung der Kugeln erlauben. Der Aufnahmezapfen ist hier zylindrisch ausgebildet.
Fig. 5 zeigt einen Schnitt vor der abstoßenden Spirale 19 und die Lage der spiralartigen Spannbahn 18.

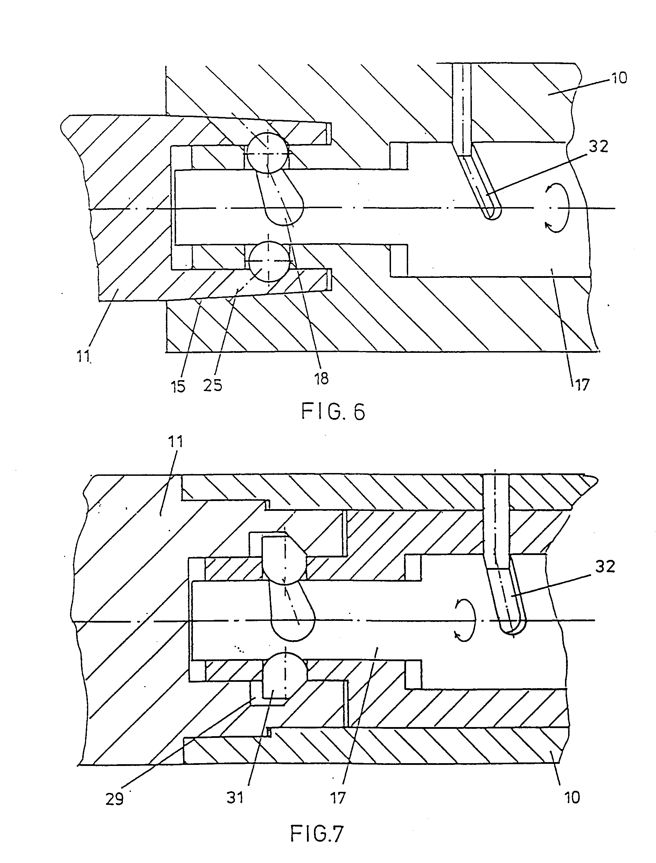

Fig. 6 zeigt eine Spannvorrichtung, bei der die Spannbahn 18 eine Raumkurve beschreibt. Um die Spannvorrichtung beim Spannen bzw. Lösevorgang nicht durch axiale Kräfte zusätzlich zu belasten, ist eine Zwangsführung 32 vorgesehen. Das Abdrückelement kann hierbei entfallen. Die Bohrungen 25 im Werkzeugkopf 11 sind schräg angebracht. Der Werkzeugkopf 11 ist ohne ringförmige Gegenfläche ausgebildet.

Fig. 7 zeigt eine Spannvorrichtung bei der als Spannelemente Spannbacken 31 vorgesehen sind, die in eine Ringnut 29 des Werkzeugkopfes 11 eingreifen. Ebenso können statt der Spannbacken Spannstifte verwendet werden. Der Aufnahmezapfen ist hier mit einem abgestuften Zylinder ausgebildet. Die Funktionsweise der in Fig. 4 bis 7 dargestellten Vorrichtungen entspricht der oben beschriebenen Arbeitsweise.

## Patentansprüche

1. Spannvorrichtung zur Verbindung von Werkzeugkopf (11) und Werkzeughalter (10) an Werkzeugmaschinen mit einem wechselbaren Werkzeugkopf (11), der mit einem zylindrischen oder zumindest teilweise kegelig ausgebildeten Aufnahmezapfen (13) versehen ist, der mit einer entsprechenden Aufnahmebohrung (15) zusammenwirkt, wobei der Werkzeughalter (10) und der Werkzeugkopf (11) mittels über die Spannvorrichtung (17) betätigbarer Spannelemente (20), die beim Spannen von innen nach außen in Ausnehmungen (25) des Werkzeugträgers bewegt werden, so verriegelbar sind, daß eine kraft- und formschlüssige Verbindung zwischen Werkzeugkopf (11) und Werkzeughalter (10) erreicht ist,
**dadurch gekennzeichnet,**
daß die Spannvorrichtung als drehbare Spannwelle (17) mit spiralig verlaufenden Führungen (18) für die Spannelemente (20) ausgebildet ist und daß die Spannwelle (17) gegenüber dem Werkzeughalter (10) gegen Verdrehen gesichert ist.

2. Spannvorrichtung nach Anspruch 1, dadurch gekennzeichnet, daß die Spannwelle (17) zusätzlich eine zweite spiralige Führung (19) zur Betätigung eines Abdrückelementes (21) aufweist.

3. Spannvorrichtung nach Anspruch 1 oder 2, dadurch gekennzeichnet, daß die Spannwelle (17) in radialen oder axialen Bohrungen (22) des Werkzeughalters (10) geführt wird.

4. Spannvorrichtung nach einem der Ansprüche 1 bis 3, dadurch gekennzeichnet, daß die Spannwelle (17) durch O-Ringe (24) gegenüber dem Werkzeughalter (10) gegen Verdrehen gesichert ist.

5. Spannvorrichtung nach einem der Ansprüche 1 bis 4, dadurch gekennzeichnet, daß der O-Ring (24) aus einem Elastomer besteht.

6. Spannvorrichtung nach einem der Ansprüche 1 bis 5, dadurch gekennzeichnet, daß die Führungen (18,19) bzw. die Spannbahn (18) über einen Spann- bzw. Drehwinkel von 20° bis 160°, vorzugsweise 90° verlaufen.

7. Spannvorrichtung nach einem der Ansprüche 1 bis 6, dadurch gekennzeichnet, daß die Führungsspirale (18,19) eine stetige Raumkurve zweiter oder höherer Ordnung beschreibt, deren Steigung - auf den Werkzeugspannvorgang bzw. das Abdrücken bezogen - kontinuierlich abnimmt, vorzugsweise exponentiell oder logarithmisch.

8. Spannvorrichtung nach einem der Ansprüche 1 bis 6, dadurch gekennzeichnet, daß die Führungsspirale (18,19) eine hyperbolische oder logarithmische Schraubenlinie im Raum beschreibt.

9. Spannvorrichtung nach einem der Ansprüche 1 bis 8, dadurch gekennzeichnet, daß die Spannelemente Kugeln (20), Backen oder Stifte sind.

10. Spannvorrichtung nach einem der Ansprüche 1 bis 9, dadurch gekennzeichnet, daß die Ausnehmung des Aufnahmezapfens (13) des Werkzeugkopfes (11) für die Spannkugeln (20) als Bohrung (25) oder Ringnut (29) ausgebildet sind.

11. Spannvorrichtung nach Anspruch 10, dadurch gekennzeichnet, daß die Ausnehmumg (25) des Aufnahmezapfens (13) eine Seitenfläche (26) aufweist, die als Schräge ausgebildet ist.

## Claims

1. Clamping device to link a tool head (11) with a tool holder (10) in machine tools comprising an interchangeable tool head (11) , which has a cylindrical or at least partially tapered receiving spigot (13), receivable in a complementary socket (15), said tool holder and the tool head are able to be connected by clamping elements (20), being actuatable by the clamping device (17), the clamping elements move from an inner position to an outer position into recesses (25) of the tool carrier during the clamping action, so that a force- and a form-fitting connection between the tool head and the tool holder is obtained, characterized in that the clamping device is formed as a rotable clamping shaft (17) with spiral-shaped guides (18) for the clamping elements (20) and that the clamping shaft (17) is secured relative to the tool holder (10) against rotationn.

2. Clamping device according to claim 1, characterized in that the clamping shaft (17) has an additional second spiral guide (19) for the actuation of a displacement member (21).

3. Clamping device according to claim 1 or 2, characterized in that the clamping shaft (17) is received in radial or axial bores (22) of the tool holder (10).

4. Clamping device according to one of the claims 1 to 3, characterized in that the clamping shaft (17) is secured relative to the tool holder (10) by O-rings (24) against rotation.

5. Clamping device according to one of the claims 1 to 4, characterized in that the O-ring (24) is composed of an elastomer.

6. Clamping device according to one of the clams 1 to 5, characterized in that the guides (18,19) respectively the clamping track (18) extends over a clamping- or turning-angle of 20° to 160°, preferably 90°.

7. Clamping device according to one of the claims 1 to 6, characterized in that the guide spiral (18,19) descibes a continual space curve of a second or a higher order, the gradient of which - relative to the tool clamping operation or, respectively, the displacement - decreases continually, preferably exponentially or logarithmically.

8. Clamping device according to one of the claims 1 to 6, characterized in that the guide spiral (18,19) describes a hyperbolic or logarithmic helix curve in space.

9. Clamping device according to one of the claims 1 to 8, characterized in that the clamping elements are balls (20), jaws or pins.

10. Clamping device according to one of the claims 1 to 9, characterized in that the recess of the receiving spigot (13) of the tool head (11) for the clamping balls (20) are formed as a borehole (25) or as an annular groove (29).

11. Clamping device according to one of the claims 1 to 10, characterized in that the recess (25) of the pin (13) has a side face (26) formed as a bevel.

## Revendications

1. Dispositif de serrage pour assembler une tête d'outil (11) et un porte-outil (10) dans des machines-outils, comportant une tête d'outil (11) interchangeable, équipée d'une queue d'emmenchement (13) cylindrique, ou réalisée, au moins en partie, conique, agissant concurramment avec un alésage de positionnement (15), le porte-outil (10) et la tête d'outil (11) pouvant être verrouillés au moyen d'organes de serrage (20), actionnés par le dispositif de serrage (17) et que l'on peut faire déplacer, par serrage, de l'intérieur vers l'extérieur dans des évidements (25) du support d'outillage, de façon à réaliser une liaison à engagement géométrique et dynamique entre la tête d'outil (11) et le porte-outil (10),
caractérisé en ce que
le dispositif de serrage est réalisé sous la forme d'un arbre de serrage tournant (17) comportant des guidages (18) disposés en spirale pour les organes de serrage (20), et en ce que l'arbre de serrage (17) est bloqué pour empêcher sa rotation par rapport au porte-outil (10).

2. Dispositif de serrage suivant la revendication 1, caractérisé en ce que l'arbre de serrage (17) présente, de plus, un deuxième guidage en spirale pour actionner un organe éjecteur (21).

3. Dispositif de serrage suivant la revendication 1 ou la revendication 2, caractérisé en ce que l'arbre de serrage (17) est guidé dans des alésages radiaux ou axiaux (22).

4. Dispositif de serrage suivant l'une quelconque des revendications 1 à 3, caractérisé en ce que l'arbre de serrage (17) est bloqué, pour empêcher sa rotation par rapport au porte-outil (10), au moyen de bagues toriques (24).

5. Dispositif de serrage suivant l'une quelconque des revendications 1 à 4, caractérisé en ce que la bague torique (24) est constituée d'un élastomère.

6. Dispositif de serrage suivant l'une quelconque des revendications 1 à 5, caractérisé en ce que les guidages (18, 19), ou la trajectoire de mise en serrage, s'étend sur un angle de rotation et de serrage de 20° à 160°, de préférence de 90°.

7. Dispositif de serrage suivant l'une quelconque des revendications 1 à 6, caractérisé en ce que la spirale de guidage (18, 19) décrit une courbe continue dans l'espace de deuxième ordre, ou d'ordre plus élevé, dont la pente - rapportée à l'opération de serrage de l'outil ou à son éjection, décroît de façon continue, de préférence exponentielle ou logarithmique.

8. Dispositif de serrage suivant l'une quelconque des revendications 1 à 6, caractérisé en ce que la spirale de guidage (18, 19) décrit dans l'espace une ligne hélicoïdle, hyperbolique ou logarithmique.

9. Dispositif de serrage suivant l'une quelconque des revendications 1 à 8, caractérisé en ce que les organes de serrage sont des billes (20), des mâchoires, ou des broches.

10. Dispositif de serrage suivant l'une quelconque des revendications 1 à 9, caractérisé en ce que l'évidement de la queue d'emmenchement (13) de la tête d'outil (11) pour les billes de serrage (20) est réalisé sous forme d'alésage (25) ou de rainure annulaire (29).

11. Dispositif de serrage suivant la revendication 10, caractérisé en ce que l'évidement (25) de la queue d'emmenchement (13) présente une surface latérale (26) réalisée sous la forme d'un chanfrein.
